# EUROPEAN PATENT APPLICATION

(11) **EP 2 639 435 A1**
(43) Date of publication of application: **18.09.2013**
(21) Application number: 12160006.8
(22) Date of filing: 16.03.2012
(51) Int. Cl.: F02D 41/14, G05B 13/04

(54) **Optimised real-time control of a highly dynamic engine system**

(71) Applicant: Perkins Engines Company Limited, Cambridgeshire PE1 5NA (GB)
(72) Inventor: Langley, Thomas, Hessle HU13 0DP (GB); Stobart, Richard, West Bridgford NG2 6RG (GB); Deng, Jiamel, Sutton Surrey SM1 3PT (GB); Zhao, Dezong, Loughborough Leicestershire LE11 5NG (GB)
(74) Representative: Widdowson, Nicholas Edward

(57) **Abstract**

An engine control system for an engine, the engine control system comprising: a first input configured to receive a first input data value relating to a first engine parameter, the first input data value being one of a first plurality of possible first input data values; and a second input configured to receive a second input data value relating to a second engine parameter, the second input data value being one of a second plurality of possible second input data values. The system further includes a data library comprising an explicit model predictive control derived set of output data values comprising a subset of output data values in respect of at least a subset of the combination of the first and second input data values of the first and second pluralities of possible input data values. The system further comprises an output configured to provide a subset of the set of output data values derived from the data library, the subset of output data values corresponding to the first input data value received at the first input and the second input data value received at the second input, the subset of output data values being configured to control one or more aspects of engine performance.

Also, a method of deriving an explicit model predictive control set of output data values for use in controlling an engine, wherein engine performance characteristics are influenced by a plurality of input values relating to a plurality of engine parameters. The method comprises: running an engine; measuring engine performance characteristics for a range of permutations of input values; using the measured engine performance characteristics and the corresponding input values to develop a model of engine behaviour; running the model for a range of input values to determine predicted engine performance characteristics for a range of permutations of input values; and populating a data library with the values derived in the step of running the model.

## Description

### Technical Field

Optimised real-time control of a highly dynamic engine system using explicit model predictive control.

### Background

Engine performance is influenced by a large number of parameters. Such parameters include operating conditions such as speed, torque/power requirements and ambient pressure which are largely governed by external factors. The parameters also include controllable conditions, such as fuel injection quantity and start of injection (SOI) timing, which may be varied in response to external factors.

Each of these parameters may vary at high frequency depending on changes to internal and external factors which affect the engine.

It is known to provide an algorithm or a plurality of interrelated algorithms to determine values for control signals for influencing the controllable conditions which govern engine performance. Such algorithms have as inputs some or all of the current engine parameters. Where there is a large number of different engine parameters which govern a particular aspect of engine performance, the algorithms can become complex. Significant processing power is required to calculate the engine control values using the algorithms in real-time.

Moreover, with an increased desire for improved fuel efficiency and reduced emissions to meet regulatory requirements, the desire to monitor and control engine performance at increasingly higher frequencies means that real-time calculations using algorithms must be performed ever more rapidly, requiring increasing processor capability.

Against this background, there is provided an engine control system as disclosed herein.

### Summary of the disclosure

The disclosure provides an engine control system for an engine, the engine control system comprising:
a first input configured to receive a first input data value relating to a first engine parameter, the first input data value being one of a first plurality of possible first input data values;
a second input configured to receive a second input data value relating to a second engine parameter, the second input data value being one of a second plurality of possible second input data values;
a data library comprising an explicit model predictive control derived set of output data values comprising a subset of output data values in respect of each combination of the first and second input data values of the first and second pluralities of possible input data values; and
an output configured to provide a subset of the set of output data values derived from the data library, the subset of output data values corresponding to the first input data value received at the first input and the second input data value received at the second input, the subset of output data values being configured to control one or more aspects of engine performance.

An embodiment of the invention will now be described, by way of example only, with reference to the accompanying drawings in which:

### Brief description of the drawings

Figure 1 is a schematic diagram showing the features of an embodiment of the engine control system of the disclosure.
Figure 2 is a schematic diagram showing how the explicit model predictive control data library of the present disclosure is derived through modelling of the engine system, determining the optimum library values and uploaded to the explicit model predictive control function of the engine control system illustrated in Figure 1.

### Detailed description

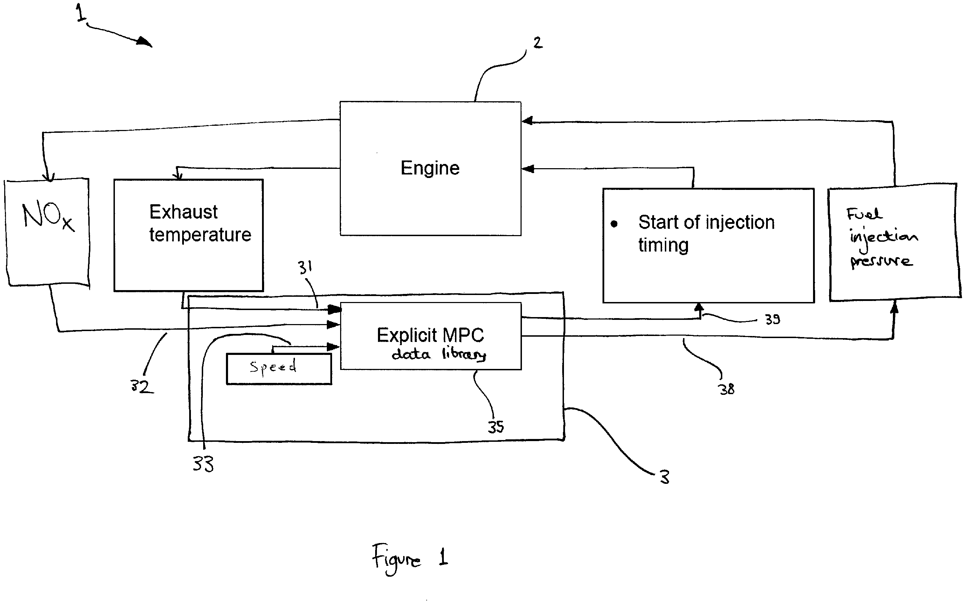

Referring to Figure 1, there is illustrated an engine assembly 1 comprising an engine 2 and an engine control system 3 for controlling the engine 2.

The engine control system 3 may comprise a first input 31, second input 32 and third input 33 configured to receive a current first input data value, a current second input data value and a current third input data value, respectively. The first, second and third data values provide a measure of first, second and third engine parameters, respectively. The first input data value may be a current exhaust temperature data value, a second input 32 may be a current quantity of mono-nitrogen oxide (NO_{X}) data value and a third input 33 may be a current engine speed data value. The inputs may be obtained by taking a current snapshot of the engine parameters.

The engine control system 3 may further comprise an explicit model predictive control (EMPC) data library 35. The engine control system 3 may still further comprise a first output 38 and a second output 39 for outputting output data values.

The EMPC data library 35 may comprise a set of output data values wherein a subset of said set of output data values is provided for each, or within an appropriate delta of each, combination of the first input data value, the second input data value and the set point data value. Accordingly, a subset of said set of data values may be provided for a wide range of combinations of possible exhaust temperature values, possible quantity of NO_{X} data values and possible engine speed data values. The subset equating to the exact combination of first, second and third data values or equating to one of a plurality of closely available combinations of first, second and third data values may be retrieved by searching for the relevant subset of said set of data values associated with the current data values received at the first, second and set point inputs 31, 32, 33.

The outputs 38, 39 may provide the subset of data values for onward processing and ultimately for controlling aspects of the engine performance. Key engine performance characteristics include transient response capability, fuel economy, and emissions control. In this manner, the relevant pre-calculated optimised data values stored in the library 35 may be obtained either for the exact combination of first, second and third input values or for one of a plurality of closely available combinations of first, second and third data values for use as outputs from the explicit model predictive control (EMPC) data library 35 in order to maintain optimum engine performance.

The inputs may change at any frequency such as, for example, every 100 ms. The system may be clocked at the same or a different frequency. Where the system is clocked at the same frequency as the frequency at which one or more of the inputs may change, for example every 100 ms, the subset of output data values may be checked and obtained at that frequency, i.e. every 100 ms. This equates to obtaining the relevant subset of the output data values (i.e. the exact or one of a plurality of closest matches) from the data library 35 at said frequency, for example 100 ms.

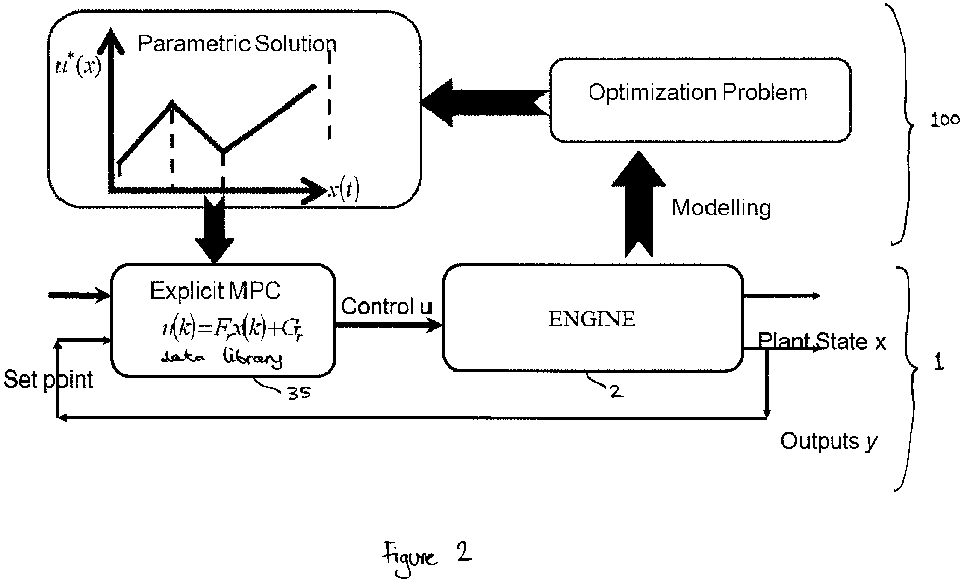

Figure 2 illustrates the engine control system 1 of Figure 1 together with an explicit model predictive control system 100 by which may be obtained - offline - the set of output data values contained in the EMPC data library 35 of the engine control system 3.

A model of the engine assembly 1 may be produced. The model may be exercised offline in order to calculate the optimal solutions for a very wide range of combinations of expected input conditions. This may enable the use of substantial (offline) processor power which may not be available in the engine control system 3.

The model may be produced through extensive testing of the engine assembly by varying the inputs and operating conditions, perhaps randomly or arbitrarily, and measuring the engine assembly behaviour under a very wide variety of combinations. By this technique, a model may be produced which models how the engine is likely to behave in response to a wide variety of factors, both internal to and external to the engine.

The model may be simplified from a high order to a low order model, possibly a linear model. The model may be refined by comparing the behaviour predicted by the model against the behaviour observed in testing of the engine assembly. The model may thereby be refined iteratively. The model may be further enhanced by more precise modelling of engine behaviour for key operating conditions, or for particular drive cycles of the engine. Consequently, there may be a larger number of subsets of output values for more frequently used modes of engine operation.

The model may be specific to engine hardware. A different model may not be required where the same engine hardware is used for different applications having different drive cycles (wherein a drive cycle represents a repeatable way in which the engine is likely to be used). Rather, the same model may be used but with different constraints in order to provide a different data library specific to the particular drive cycle for the particular application. By contrast, an engine having entirely different hardware may require an entirely different model.

Once the model has been produced for a particular engine hardware, the model may be executed to calculate a data set for a wide range of first, second and third input values, in every permutation of those wide range of first, second and third input values. That is to say, for every feasible permutation of the wide range of first, second and third input values, a subset of data is provided. This does not mean necessarily that a subset of data is provided for every conceivable first, second and third input value. Where it is the case that a subset of data is not provided for a particular conceivable first input value, for example, it is self evident that a subset of data is not provided for every permutation of second and third input value which might be seen in combination with that particular conceivable first input value. The set of data provided by the model may be described as a "complete set of output data values" notwithstanding that the complete set of output data values may not include a subset of output values for every conceivable first, second and third input value. As such, the term "complete set of output data values" may be used simply to distinguish from particular subsets of the output data values.

Once generated, the complete set of output data values may then be uploaded - once - from the model to the engine control system 3, perhaps at the time of manufacture or programming or reprogramming of engine control system 3. It is only the EMPC data library 35 and not the entire model 100 by which the data library 35 is produced which needs to be uploaded into the engine control system for use.

Once the complete set of output data values is uploaded to the EMPC data library 35, specific subsets of output data values may be retrieved from the EMPC data library 35 in accordance with the current first, second and third input values in order to provide optimised output values, as derived by the model, for the particular current engine conditions.

In use, the input values are read into the controller in order to determine the relevant output values from the data library 35 for achieving the desired engine performance. The EMPC controller will seek to calculate a series of sets of output values that achieve the desired engine performance over a number, n, of clock cycles.

The controller 35 proposes a first set of output values for the first clock cycle, by searching the EMPC data library for a set of output values, which, based on prior modelling and analysis, will result in the most reduced error between the measured engine state and the desired engine state.

Thereafter, having proposed the first set of output values based on the modelled engine state resulting from those output values, the modelled engine state resulting from the first set of output values is used to determine the second set out output values.

A second set of output values for the second clock cycle is proposed by searching the EMPC data library for a set of output values, which, based on prior modelling and analysis, will result in the most reduced error between the modelled engine state resulting from the first set of output values, and the desired engine state.

Thereafter, having proposed the second set of output values based on the modelled engine state resulting from those output values, the modelled engine state resulting from the second set of output values is used to determine the third set out output values.

A third set of output values for the third clock cycle is proposed by searching the EMPC data library for a set of output values, which, based on prior modelling and analysis, will result in the most reduced error between the modelled engine state resulting from the second set of output values, and the desired engine state.

This process continues up to an n^{th} set of output values being proposed for the n^{th} clock cycle whereby the error between the state resulting from the n^{th} set of output values and the desired state is sufficiently small.

Having determined this series of proposed sets of output values that are predicted to achieve a sufficiently small error from the desired engine state, the first set of output values is executed, which effects a change in state/performance of the engine. The new engine state is measured and becomes the input values, which are read into the controller, and the process continues. Therefore, changes in engine state resulting from influences external to the controller, changes in desired engine state, or model inaccuracies can be captured, considered and compensated for, when determining the controller's next action.

Effectively, the data library 35 of output values allows for an engine control system to require less processor power than that which may be required to calculate in real time a set of preferred output values for a particular set of input conditions. Furthermore, it allows for values to be optimised by the model which may have considerably more processing capability than may be justifiable to include in every engine control system.

It may be that not every possible input value for each of the first, second, and third inputs, is listed in the data library 35. For example, the engine parameter represented by one of the input values may be measured in increments of 1 unit, but that input value may only be present in the data library in increments of 2 units. Similarly, the engine parameter represented by a second of the input values may be measured in increments of 1 unit, but that input value may only be present in the data library in increments of 2 units. Thus, there may be a number of permutations of data input values for which no exact solution is available in the data library. Where this is the case, controller logic may be applied in order to select the most appropriate controller action based on the output values of the data library in respect of input values which are close to the combination of current input values. One example of such appropriate logic would be fuzzy logic. This may be particularly appropriate where the controller is faced with choosing either, on the one hand, a subset of output values relating to an exact match for first input data value and a close match for a second input data value or, on the other hand, a subset of output values relating to a close match for the first input data value and an exact match for the second input data value.

In a particular case where a data library contains no exact solution for a particular combination of input values, there may be a large number of possible close solutions from which to choose. Fuzzy logic may be particularly appropriate in such cases in order to select, from the identified close solutions, a single solution which is deemed to be most appropriate.

The data inputs may relate to any number of the following non-exhaustive list of engine parameters: speed; exhaust temperature; NOₓ emissions; particulate matter emissions; atmospheric pressure; power demand; and torque requirements.

The output data values may govern any number of engine parameters. For example, the subset of output data values may comprise a first output data value and a second output data value, wherein the first output data value governs, for example, fuel injection pressure and the second output data value governs, for example, start of injection timing.

The data outputs may relate to any number of the following non-exhaustive list of aspects of engine performance: fuel quantity; fuel injection pressure; ratio of fuel between shots; start of injection timing. These aspects, in turn, have an influence on factors such as level of NOₓ emissions and particulate matter engine emissions.

The overall objective of the arrangement may be, for example, to minimise particulate and NOₓ emissions. In this case the model will need to consider the desired state (i.e. parameters) of the engine in light of the current state (i.e. parameters) of the engine and provide model derived optimised data outputs for achieving the desired state whilst at the same time seeking to minimise particulate and NOₓ emissions.

It has been demonstrated that the arrangement of the present disclosure is particularly appropriate for a system having three inputs and three outputs. In such a case, the possible number of permutations of first, second and third input values is such as to be large enough to warrant the offline EMPC modelling (since online algorithmic calculation in the controller itself may be too processor intensive) but not so large as to require additional memory to that which might ordinarily be provided in engine controller hardware and also not so large as to produce a data library having so many dimensions that significant processing power is required to identify and retrieve the most appropriate subset of outputs from within the library. Where significant processor power is required to find the most appropriate subset of outputs this may negate one of the advantages of the arrangement which is to avoid the level of processor power required to carry out algorithmic calculations to determine optimised outputs in real time (without the use of a library populated by an EMPC derived model).

While the illustrated embodiment relates to control of a fuel system for an engine, a corresponding control system with corresponding inputs and outputs may be used for controlling any aspect of engine performance such as, for example, an engine gas system having exhaust gas recirculation control. In this case, a model can be configured so as to determine outputs which, for example, minimise fuel consumption and/or CO₂ emissions. Another example embodiment of the invention relates to control of an exhaust gas after treatment apparatus. In this case, a model can be configured so as to determine outputs relating to, for example, particulate filter regeneration.

Indeed, a wide range of further applications is also contemplated, as would be clear to the skilled person.

The detailed description of the disclosure has been made with respect to a single embodiment which represents one narrow implementation of the arrangement of the disclosure in its broadest sense. The scope of the present disclosure is to be considered in light of the appended claims. It should not be inferred that the specific implementation of the detailed description is intended to limit the scope of the claims beyond the scope of the claims themselves.

## Claims

1. An engine control system for an engine, the engine control system comprising:
a first input configured to receive a first input data value relating to a first engine parameter, the first input data value being one of a first plurality of possible first input data values;
a second input configured to receive a second input data value relating to a second engine parameter, the second input data value being one of a second plurality of possible second input data values;
a data library comprising an explicit model predictive control derived set of output data values comprising a subset of output data values in respect of at least a subset of the combination of the first and second input data values of the first and second pluralities of possible input data values; and
an output configured to provide a subset of the set of output data values derived from the data library, the subset of output data values corresponding to the first input data value received at the first input and the second input data value received at the second input, the subset of output data values being configured to control one or more aspects of engine performance.

2. The engine control system of Claim 1 wherein the subset of output data values of the data library corresponding to the first input data value received at the first input and the second input data value received at the second input corresponds to the exact first input data value received at the first input and the exact second input data value received at the second input.

3. The engine control system of Claim 1 wherein the subset of output data values corresponding to the first input data value received at the first input and the second input data value received at the second input corresponds to a subset of output data values of a group of subsets of output data values, the group of subsets being those associated with both
a first input data value which is close to the exact first input data value received at the first input and
a second input data value which is close to the exact second input data value received at the second input.

4. The engine control system of Claim 3 wherein the subset of output data values corresponding to the first input data value received at the first input and the second input data value received at the second input is selected from the group of subsets by fuzzy logic.

5. The engine control system of any preceding claim wherein the engine control system further comprises:
a third input configured to receive a third input data value relating to a third engine parameter, the third input data value being one of a third plurality of possible third input data values; and wherein
the data library comprises an explicit model predictive control derived set of output data values comprising a subset of output data values in respect of a subset of the combination of the first, second and third input data values of the first, second and third pluralities of possible input data values.

6. The engine control system of any preceding claim wherein the engine control system is an engine fuel control system.

7. The engine control system of Claim 6 wherein the first, second, and, where present, third inputs each relate to one of the engine parameters:
speed;
exhaust temperature;
NOₓ emissions;
particulate matter exhaust emissions;
atmospheric pressure;
power demand; and
torque requirements

8. The engine control system of Claim 6 or Claim 7 wherein the set of output data values governs one or more and preferably three of the following aspects of engine performance:
fuel injection quantity;
fuel injection pressure;
ratio of fuel between shots; and
start of injection timing.

9. The engine control system of any of Claim 1 to 5 wherein the engine control system is an engine gasflow control system.

10. The engine control system of any of Claim 9 wherein the engine control system is an electric turbo charger system.

11. An engine management system for controlling an engine, the engine management system comprising the engine control system of any preceding claim.

12. The engine management system of Claim 11 wherein the engine management system further comprises an equivalent consumption minimisation strategy.

13. A method of deriving an explicit model predictive control set of output data values for use in controlling an engine, wherein engine performance characteristics are influenced by a plurality of input values relating to a plurality of engine parameters,
the method comprising:
running an engine,
measuring engine performance characteristics for a range of permutations of input values;
using the measured engine performance characteristics and the corresponding input values to develop a model of engine behaviour;
running the model for a range of input values to determine predicted engine performance characteristics for a range of permutations of input values; and
populating a data library with the values derived in the step of running the model.

14. The method of claim 13 wherein the step of measuring engine performance characteristics for a range of permutations of input values is repeated for a plurality of drive cycles.

15. A method of programming an engine control system for an engine, the method comprising performing the method of Claim 13 and 14 and uploading the data library to the engine control system.
